# EUROPÄISCHE PATENTSCHRIFT

(11) **EP 2 146 877 B1**
(45) Veröffentlichungstag und Bekanntmachung des Hinweises auf die Patenterteilung: **22.12.2010**
(21) Anmeldenummer: 08735436.1
(22) Anmeldetag: 19.03.2008
(51) Int. Cl.: B60S 1/40, B60S 1/38

(54) **ANSCHLUSSVORRICHTUNG ZUM GELENKIGEN VERBINDEN EINES WISCHBLATTS MIT EINEM WISCHARM**
CONNECTION DEVICE FOR THE ARTICULATED CONNECTION OF A WIPER BLADE TO A WIPER ARM
DISPOSITIF DE CONNEXION POUR LA CONNEXION ARTICULEE D'UN BALAI D'ESSUIE-GLACE A UN BRAS D'ESSUIE-GLACE

(30) Priorität: 07.05.2007 DE 102007021333
(43) Veröffentlichungstag der Anmeldung: 27.01.2010
(73) Patentinhaber: Robert Bosch GmbH, 70442 Stuttgart (DE)
(72) Erfinder: VAN BAELEN, David, B-3020 Winksele (BE); WESTERMANN, Klaus-Juergen, 76332 Bad Herrenalb (DE); GEPPERT, Bernhard, 76131 Karlsruhe (DE); JANSSIS, Yves, B-3800 Sint-Truiden (BE); HERINCKX, Dirk, B-3350 Dries-Linter (BE)
(86) Internationale Anmeldenummer: PCT/EP2008/053275
(87) Internationale Veröffentlichungsnummer: WO 2008/135308

(56) Entgegenhaltungen:
- EP-A- 1 837 259
- DE-A1- 10 122 764
- US-A1- 2007 067 939

## Beschreibung

### Stand der Technik

Die Erfindung geht von einer Anschlussvorrichtung zum gelenkigen Verbinden eines Wischblatts mit einem Wischarm nach dem Oberbegriff des Anspruchs 1 aus.

Aus der WO 02/40328 A1 ist eine derartige Anschlussvorrichtung bekannt. Sie umfasst einen Adapter in Form einer Blechkralle, eine Haltefeder aus Kunststoff und ein mit dem Wischarm fest verbundenes Verbindungselement. Der Adapter ist an einem Tragelement des Wischblatts in Form zweier parallel verlaufender Federschienen mittels Krallen und/oder durch Schweißen befestigt. Er besitzt ein u-förmiges Querschnittprofil, wobei ausgehend von einem dem Tragelement benachbarten Bodenteil Seitenwände etwa um 90° von dem Tragelement weggebogen sind. In den Seitenwänden sind Öffnungen vorgesehen, in die ein Lagerbolzen drehfest eingesetzt ist. Auf diesem ist die Haltefeder, die zwischen den Seitenwänden des Anschlusselements seitlich geführt ist, mit einer Nabe schwenkbar gelagert. Die Haltefeder besitzt Rastmittel und Haltemittel, mit denen sie in das zum Wischblatt hin offene Profil des Verbindungselements eingeklippst ist. In der montierten Stellung übergreift das Verbindungselement sowohl die Haltefeder als auch die Seitenwände des Adapters von außen her.

Eine ähnliche Anschlussvorrichtung zum gelenkigen Verbinden eines Wischblatts mit einem Wischarm ist aus der DE 103 47 637 A1 bekannt. Hierbei besitzt der Adapter in Form einer Blechkralle einen mittleren Längssteg, der vom Tragelement des Wischblatts weg weist, und in den eine quer verlaufende Schwenkachse drehfest eingesetzt ist. Auf der zu beiden Seiten des Längsstegs fliegend vorstehenden Schwenkachse ist die Haltefeder mit Lageröffnungen schwenkbar gelagert, die in seitlichen Federzungen angeordnet sind. Die Haltefeder, die aus Kunststoff gefertigt ist, umfasst die Blechkralle von außen und wird mittels Rastelementen und Halteelementen in das zum Wischblatt hin offene Verbindungselement eingeklippst, das fest mit dem Wischarm verbunden ist. Der Adapter ist zum einen durch innere Führungsstege seitlich auf der Blechkralle geführt und zum anderen an seinen Seitenwänden spielfrei im Verbindungselement eingesetzt. Hierzu dient eine Taste, die am Ende einer Federzunge in einer Deckwand der Haltefeder vorgesehen ist und im montierten Zustand in ein passendes Rastloch einer Deckwand des Verbindungselements einrastet.

Schließlich ist aus der DE 103 40 139 A1 eine Anschlussvorrichtung bekannt, die einen Adapter in Form einer Blechkralle besitzt. Diese ist mit Krallen am Tragelement befestigt, während sich auf der dem Tragelement abgewandten Seite ein Mittelsteg in Längsrichtung erstreckt. An einer Stirnseite des Adapters ist ein Lagerelement in Form einer offenen Nabe angeformt, in der ein passendes Lagerelement einer Haltefeder gelagert ist. Die Haltefeder besitzt eine Führungskulisse, mit der sie an dem Mittelsteg seitlich geführt ist. Zur Begrenzung der Schwenkbewegung zwischen dem Wischblatt und dem Wischarm besitzt die Haltefeder einen Fanghaken, der bei der Montage und an einem Vorsprung an dem Mittelsteg einrastet und durch eine Taste entriegelt werden kann. Abschließend wird eine Abdeckkappe auf den Adapter geklippst, sodass dieser und die Haltefeder gegenüber der Umgebung geschützt sind.

DE-A-10122764 offenbart auch den Oberbegriff des Anspruchs 1.

### Offenbarung der Erfindung

Nach der Erfindung weist eine Grundverkleidung, die den Adapter umgibt und an diesem oder dem Tragelement befestigt werden kann, eine in Längsrichtung verlaufende Führungsschiene auf. Auf dieser ist in Längsrichtung verschiebbar eine Schiebefeder gelagert, die in Längsrichtung der Führungsschiene durch Rastmittel in verschiedenen Positionen in unterschiedlichen Abständen zu einem Führungsblock der Grundverkleidung feststellbar ist. Der Führungsblock schließt sich an das wischarmseitige Ende der Führungsschiene an. Dabei sitzt die Grundverkleidung zweckmäßigerweise mittels eines Befestigungsprofils auf dem Adapter. Das Befestigungsprofil kann als Klipp ausgebildet sein, sodass es auf den Adapter quer zu dessen Längsrichtung aufgeklippst werden kann.

Gemäß seiner Ausgestaltung der Erfindung besitzt die Führungsschiene an ihren Längsseiten Längsnuten, in denen Längsrippen der Schiebefeder geführt sind. Diese Nutfederverbindung kann auch umgekehrt ausgeführt sein, sodass sich die Längsrippen an der Grundverkleidung und die Längsnuten an der Schiebefeder befinden. Zum Fixieren der Schiebefeder in den verschiedenen Positionen weist die Führungsschiene an den entsprechenden Stellen ihrer Erstreckung in Längsrichtung als Rastmittel zwei einander gegenüberliegende Rastvertiefungen auf, die zu zwei entsprechenden Einraststutzen an der Schiebefeder passen. Die Einraststutzen stützen sich nachgiebig an der Schiebefeder ab, sodass sie in die Rastvertiefungen einrasten, wenn die Schiebefeder auf die Führungsschiene geschoben wird. Durch Druck von außen auf die Seitenwände der Schiebefeder werden die Einraststutzen entriegelt, sodass die Schiebefeder in eine andere Rastposition verstellt oder demontiert werden kann.

Die erfindungsgemäße Anschlussvorrichtung ist geeignet, um Wischarme, die sich insbesondere durch unterschiedliche Verbindungselemente unterscheiden und entweder eine Toplock-Anbindung oder eine Sidelock-Anbindung ermöglichen, mit einem Wischblatt gelenkig zu verbinden. Hierzu kann die Schiebefeder in verschiedenen Positionen in Längsrichtung auf der Grundverkleidung fixiert werden, sodass ihre Gelenkmittel entsprechend dem jeweils verwendeten Verbindungselement des Wischarms an der richtigen Stelle des Wischblatts platziert sind.

Gemäß einer Ausgestaltung der Erfindung besitzt die Anschlussvorrichtung eine Haltefeder, die an ihrer Stirnseite eine Lagerwalze aufweist, die mit einem entsprechenden Lagerelement an der Schiebefeder ein Scharnier bildet. Die Haltefeder wird zweckmäßigerweise in ein Aufnahmeprofil eines Verbindungselements des Wischarms stirnseitig eingesetzt und verrastet, indem eine Taste am Ende einer Federzunge in ein Rastloch des Aufnahmeprofils einrastet. Das Rastloch befindet sich zweckmäßigerweise in einer Deckwand des Aufnahmeprofils, es kann jedoch auch alternativ in einer Seitenwand angeordnet werden. Bei der Ausführung mit einer Haltefeder wird die Schiebefeder in einer Stellung fixiert, die einen großen Abstand von einem Führungsblock der Grundverkleidung aufweist, damit die Haltefeder im Betrieb einen ausreichenden Schwenkwinkel hat und eine gute seitliche Führung gewährleistet. Hierzu sind die Innenseiten der Seitenwände der Haltefeder an den Außenseiten des Führungsblocks der Grundverkleidung geführt.

In montierter Stellung wird die Haltefeder zweckmäßigerweise durch Querzapfen in Längsrichtung gehalten, die an der Grundverkleidung vorgesehen sind und in entsprechende Führungen der Haltefeder eingreifen. Die Führungen und die Lage der Querzapfen sind so ausgelegt, dass sie die Schwenkbewegung der Haltefeder nicht beeinträchtigen, jedoch eine Verschiebung der Haltefeder in Längsrichtung relativ zur Schiebefeder in der Betriebsstellung verhindern. Die Querzapfen können in vorteilhafter Weise durch einen Querstift gebildet werden, der in einem Mittelsteg des Adapters angebracht ist und nach außen ein Stück weit durch Öffnungen aus den Seitenwänden des Führungsblocks vorsteht.

Nach einer weiteren Ausgestaltung der Erfindung wird in einer mittleren Position der Schiebefeder zwischen dieser und dem Führungsblock ein Zwischenraum gebildet, in den ein Gelenkkopf eines anderen Verbindungselements passt, wobei eine Verlängerung einer Deckwand der Schiebefeder den Zwischenraum überdeckt und in eine Halterung des Führungsblocks eingreift. Bei dieser gelenkigen Verbindung nach Art einer Toplock-Verbindung wird der Gelenkkopf des Verbindungselements mit seiner Gelenkachse in den Zwischenraum gebracht, bevor die Schiebefeder in der dazugehörenden Position verrastet wird. Im montierten Zustand überdeckt eine Verlängerung an der Deckwand der Schiebefeder den Zwischenraum und greift in eine Halterung des Führungsblocks ein, sodass der Gelenkkopf zwischen dem Führungsblock und der Schiebefeder schwenkbar gehalten wird.

Bei einer weiteren Möglichkeit zum gelenkigen Verbinden des Wischblatts mit einem Verbindungselement nach dem Sidelockprinzip nimmt die Schiebefeder eine Position am Ende der Führungsschiene ein, das dem antriebsseitigen Ende des Wischblatts abgewandt ist. Mit ihren Seitenwänden überdeckt sie dabei den Führungsblock seitlich ein Stück weit, während die Verlängerung der Deckwand in die Halterung des Führungsblocks eingreift. In den Seitenwänden der Schiebefeder sind Lageröffnungen vorgesehen. In diese wird ein Gelenkstift des zugehörigen Verbindungselements bei der Montage seitlich eingeschoben und somit schwenkbar gelagert, bevor der Wischarm in seine Betriebsstellung gedreht wird. In dieser überdeckt eine Brücke, die in Längsrichtung zum antriebsseitigen Ende des Verbindungselements versetzt zum Gelenkstift angeordnet ist, die Deckwand der Schiebehülse und wird durch ihr abgewinkeltes Ende in der Betriebsstellung in Längsrichtung des Gelenkstifts blockiert. Zweckmäßigerweise kann zur Verstärkung der Lagerung in die Lageröffnungen eine Lagerhülse eingesetzt werden.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Anschlussvorrichtung in Explosionsdarstellung zusammen mit einem Wischblatt und einem Verbindungselement,
- Fig. 2: eine Seitenansicht einer teilmontierten Anschlussvor- richtung für eine Toplockausführung,
- Fig. 3: eine Seitenansicht einer montierten Anschlussvorrich- tung nach Fig. 2,
- Fig. 4: und Fig. 5 Varianten zu Fig. 3,
- Fig. 6: und Fig. 7 Seitenansichten der Ausführung nach Fig. 4 in unterschiedlichen Montagepositionen,
- Fig.: 8 eine Seitenansicht der Ausführung nach Fig. 5 in teil- montiertem Zustand und
- Fig. 9: eine Ansicht in Richtung eines Pfeils IX in Fig. 8.

### Ausführungsformen der Erfindung

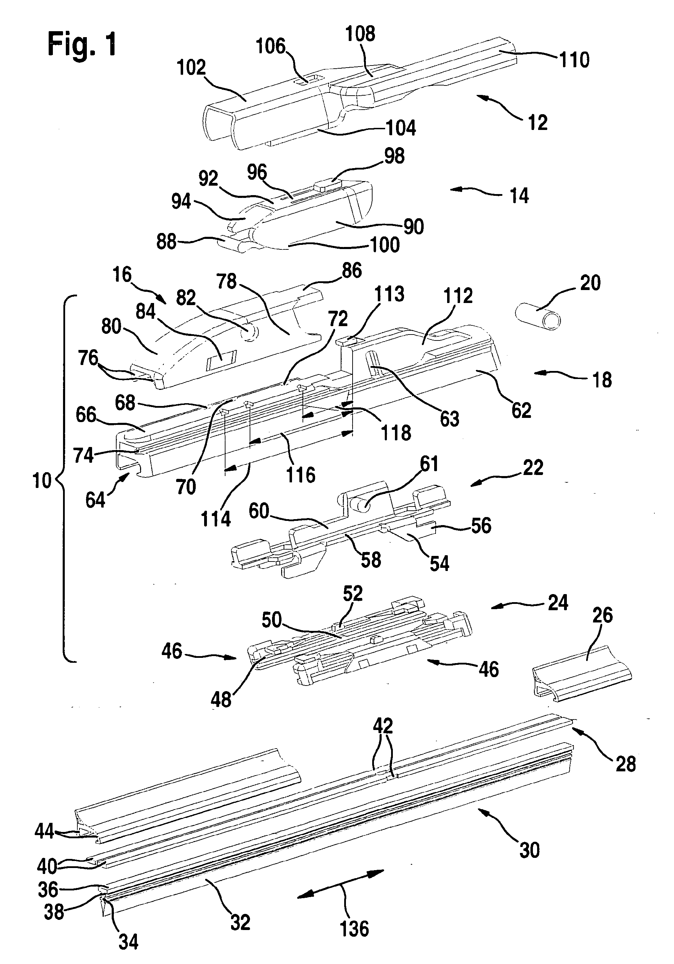

Ein Scheibenwischer nach Fig. 1 umfasst ein Verbindungselement 12, das das abtriebsseitige Ende eines nicht dargestellten Wischarms bildet, und eine Anschlussvorrichtung 10 zum gelenkigen Verbinden des Verbindungselements 12 mit einem Wischblatt, das einen Wischgummi 30, ein Tragelement 28 in Form von zwei Federschienen 40 und gegebenenfalls einen Klippspoiler 26 beinhaltet. Der Wischgummi 30 besitzt eine Wischlippe 32, die über einen Kippsteg 34 mit einer Kopfleiste 36 verbunden ist. Diese besitzt zwei seitliche Längsnuten 38, in die Federschienen 40 eingesetzt werden. Auf den Federschienen 40, die ein Stück weit seitlich aus den Längsnuten 38 vorstehen, sitzen zu beiden Seiten eines Adapters 22, 24 der Klippspoiler 26 mittels eines Führungsprofils 44.

Die Anschlussvorrichtung 10 in der Ausführung nach Fig. 1 umfasst einen mehrteiligen Adapter 22, 24, eine Grundverkleidung 18 und eine Schiebefeder 16. Die Grundverkleidung 18 und die Schiebefeder 16 bilden die Kernelemente der Anschlussvorrichtung 10.

Mit dem Adapter 22, 24 ist die Anschlussvorrichtung 10 mit dem Tragelement 28 fest verbunden. Hierzu umfasst ein Basisadapter 24, der in Längsrichtung 136 geteilt ist, die aus der Kopfleiste 36 vorstehenden Teile der Federschienen 40 mit seinen Führungsnuten 48. Nocken 50 in den Führungsnuten 48 fixieren die Teile des Basisadapters 24 in Längsrichtung 136 der Federschienen 40, indem sie in entsprechende Aussparungen 42 der Federschienen 40 eingreifen. Die Teile 46 des Basisadapters 24 werden durch einen Funktionsadapter 22 in Form einer Blechkralle zusammengehalten, die mit Füßen 54 die Seiten des Basisadapters 24 umfassen. An den Füßen 54 angeformte, in Längsrichtung 136 weisende Laschen 56 werden bei der Montage in seitliche Aussparungen des Basisadapters 24 umgebogen und fügen somit die Teile fest zusammen. Die Teile 46 des Basisadapters 24 und damit auch die Federschienen 40 werden zueinander durch Zentriernocken 52 ausgerichtet, die in die entsprechenden Aussparungen eines Bodens 58 des Funktionsadapters 22 eingreifen. Weitere Aussparungen und die Ränder des Bodens 58 bilden mit entsprechenden Vorsprüngen des Basisadapters 24 formschlüssige Verbindungen zwischen dem Basisadapter 24 und dem Funktionsadapter 22, sodass eine gute Verbindung zwischen dem Funktionsadapter 22, den Teilen 46 des Basisadapters 24 und dem Tragelement 28 gegeben ist.

Der Funktionsadapter 22 besitzt auf der dem Tragelement 28 abgewandten Seite einen Mittelsteg 60, mit verschiedenen Einschnitten, die eine geeignete Längskontur ergeben, um den Bewegungsfreiraum für unterschiedliche Wischarme zu ermöglichen. Die Grundverkleidung 18 wird mit ihrem Befestigungsprofil 64 quer zur Längsrichtung 136 auf den montierten Adapter 22, 24 geklippst, wobei die Seitenwände 62 der Grundverkleidung 18 die Seiten des Adapters 22, 24 überdecken. An der dem Befestigungsprofil 64 abgewandten Seite besitzt die Grundverkleidung 18 eine Führungsschiene 66, an die sich in Längsrichtung 136 ein Führungsblock 112 anschließt. Die Führungsschiene 66 und der Führungsblock 112 decken im Wesentlichen den Mittelsteg 60 des Funktionsadapters 22 nach außen ab. Im Bereich des Führungsblocks 112 besitzt die Grundverkleidung 18 seitliche Öffnungen 63 durch die im montierten Zustand ein Querstift 61 nach außen ragt. Dieser ist in den Mittelsteg 60 des Funktionsadapters 22 eingesetzt und fixiert die Grundverkleidung 18 in Längsrichtung 136.

Die Führungsschiene 66 weist an ihren Außenseiten Längsnuten 74 auf, in die Längsrippen 76 der Schiebefeder 16 eingreifen. Die so in Längsrichtung 136 auf der Grundverkleidung 18 verschiebbare Schiebefeder 16 kann in unterschiedlichen Abständen 114, 116, 118 vom Führungsblock 112 durch Rastmittel fixiert werden. Diese werden durch Rastvertiefungen 68, 70, 72 gebildet, in die federnd nachgiebige Einraststutzen im Inneren der Schiebefeder 16 einrasten. Zur Demontage bzw. zum Verstellen der Schiebefeder 16 können die Einraststutzen durch Druck auf Griffleisten 84 an den Außenwänden 78 der Schiebefeder 16 außer Eingriff gebracht werden.

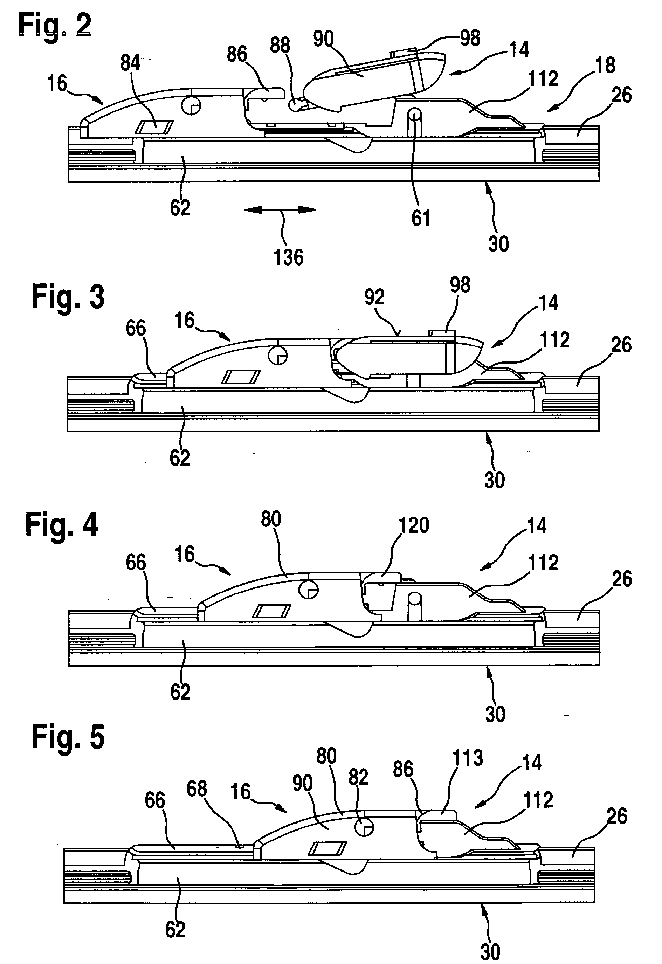

Die Seitenwände 78 der Schiebefeder 16 sind durch eine Deckwand 80 miteinander verbunden, die eine Verlängerung 86 zum Führungsblock 112 hin aufweist. Je nach Position der Federschiene 16 auf der Führungsschiene 66 greift die Verlängerung 86 mehr oder weniger in eine Halterung 113 an dem Führungsblock 112 ein. Die unterschiedlichen Abstände 114, 116, 118 auf der Schiebefeder 16 vom Führungsblock 112 ermöglichen die Verbindung mit unterschiedlichen Wischarmen. So kann z.B. ein Wischarm mit einem Verbindungselement 12 über eine Haltefeder 14 mit der Anschlussvorrichtung 10 verbunden werden (Fig. 2 und Fig. 3). Das Verbindungselement 12 ist über ein Verbindungsprofil 110 mit einem nicht dargestellten Wischarm verbunden. An das Verbindungsprofil 110 schließt sich über eine Kröpfung 10B ein seitlich versetztes Aufnahmeprofil 102 an, in das stirnseitig die Haltefeder 14 eingeschoben werden kann.

Die Haltefeder 14 besitzt zwei Seitenwände 90, die durch eine Deckwand 92 miteinander verbunden sind. In der Deckwand 92 bilden Längsschlitze eine Federzunge 96, an deren freiem Ende eine nach außen weisende Taste 98 angeformt ist. Beim Einschieben der Haltefeder 14 in das Aufnahmeprofil 102 rastet die Taste 98 in ein entsprechendes Rastloch 106 des Aufnahmeprofils 102. Dabei liegt die Haltefeder 16 mit einem Anschlag 100 am unteren Rand der Seitenwand 90 an einer unteren Rippe 104 des Aufnahmeprofils 102 an. Für die Demontage der Haltefeder 14 wird Verrastung durch Druck auf die Taste 98 gelöst. Die Haltefeder 14 besitzt an ihrer der Schiebefeder 16 zugewandten Stirnseite eine Lagerwalze 88, die im montierten Zustand in die Schiebefeder 16 eingreift, mit einem entsprechenden Lagerelement verrastet und ein Scharnier bildet. Dabei greift die Verlängerung 86 der Deckwand 80 der Schiebefeder 16 in eine Aussparung 94 zwischen den Seitenwänden 90 der Haltefeder.

Bei der Montage wird zunächst die Haltefeder 14 in die Schiebefeder 16 eingeführt und die Lagerwalze 88 verrastet, bevor die Schiebefeder 16 in die zur Rastvertiefung 68 gehörende Position verschoben wird. Daraufhin wird die Haltefeder 14 in das Aufnahmeprofil 102 des Verbindungselements 12 eingeschoben und verrastet. Fig. 3 zeigt die montierte Betriebsstellung. In dieser Stellung können die über die Grundverkleidung 18 vorstehenden Teile des Querstifts 61 in Führungen der Haltefeder 14 eingreifen, sodass diese in Längsrichtung 136 gehalten wird, jedoch in Schwenkrichtung frei beweglich ist.

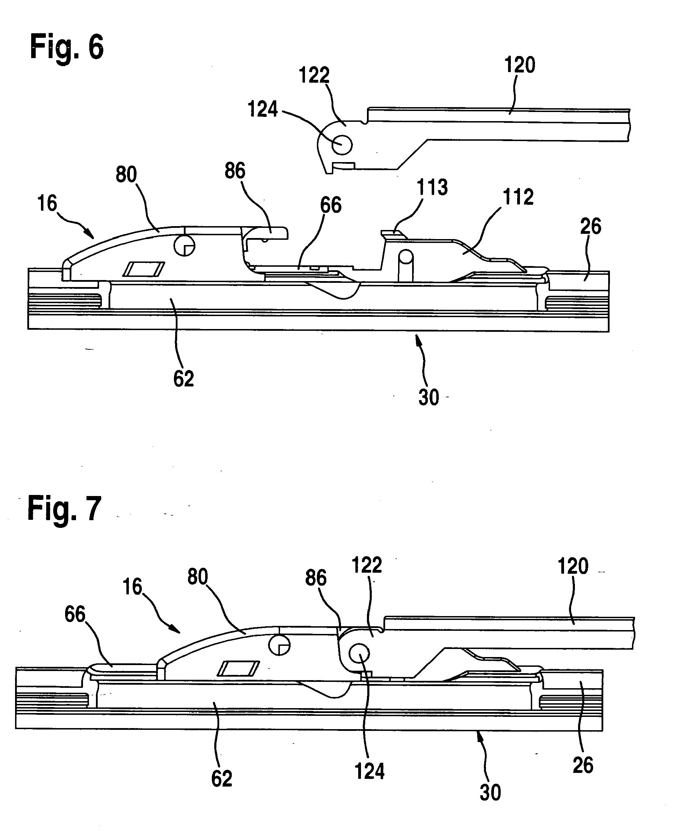

Im Unterschied zur Ausführung nach Fig. 3 nimmt bei der Ausführung nach Fig. 4 die Schiebefeder 16 auf der Führungsschiene 66 eine Position ein, die der Rastvertiefung 70 entspricht. Diese eignet sich für ein Verbindungselement 120 eines Wischarms mit einem Gelenkkopf 122, der eine Gelenkachse 124 aufweist (Fig. 6). Während sich die Schiebefeder 16 in ihrer Ausgangsposition befindet, wird der Gelenkkopf 122 des Verbindungselements 120 in den Zwischenraum zwischen der Schiebefeder 16 und dem Führungsblock 112 eingefügt. Danach wird die Schiebefeder 16 in die mittlere Rastposition geschoben, wobei die Verlängerung 86 der Deckwand 80 der Schiebefeder 16 über den Gelenkkopf 122 in die Halterung 113 am Führungsblock 112 eingreift, sodass das Wischblatt 26, 28, 30 um die Gelenkachse 124 schwenkbar am Wischarm mit dem Verbindungselement 120 gelagert ist.

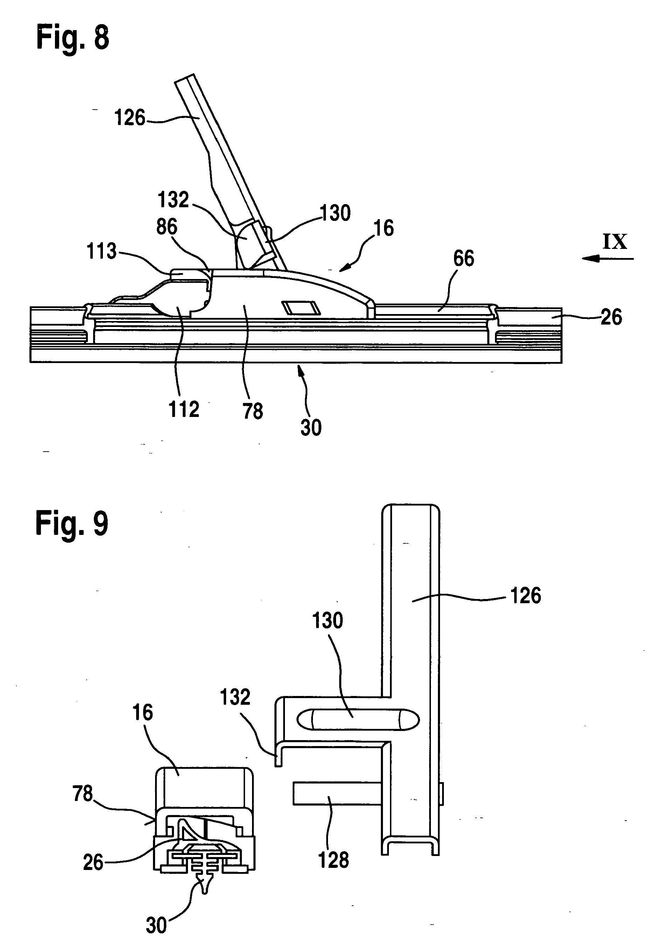

Im Unterschied zu den Ausführungen nach Fig. 3 und 4 befindet sich die Schiebefeder 16 bei der Ausführung nach Fig. 5 in einer dritten Position, die den Rastvertiefungen 72 entspricht. Diese liegen dem Führungsblock 112 am nächsten, sodass die Seitenwände 78 der Schiebefeder 16 den Führungsblock 112 seitlich weit überdecken und die Verlängerung 86 der Deckwand 80 der Schiebefeder tief in die Halterung 113 am Führungsblock 112 eingreift. Diese Position ist für einen Wischarm mit einem Verbindungselement 126 vorgesehen, das üblicherweise für eine Sidelock-Verbindung zwischen dem Wischarm und dem Wischblatt 26, 28, 30 verwendet wird. Das Verbindungselement 126 besitzt in der Nähe seines freien Endes einen Gelenkstift 128, zu dem zur Antriebsseite hin versetzt eine Brücke 130 mit einem abgewinkelten Ende 132 vorgesehen ist. Bei der Montage wird die auf die Grundverkleidung 18 montierte Schiebefeder 16 bei abgewinkelter Stellung des Verbindungselements 126 (Fig. 8) seitlich auf den Gelenkstift 128 geschoben. Hierzu dienen einander gegenüberliegende Lageröffnungen 82 in den Seitenwänden 78 der Schiebefeder 16. Die Lageröffnungen 82 sind zweckmäßigerweise durch eine Lagerhülse 20 miteinander verbunden. Nach der Montage des Wischblatts 26, 28, 30 mit der Anschlussvorrichtung 10 wird das Verbindungselement 126 in die Betriebsstellung geschwenkt, die etwa parallel zum Wischgummi 30 verläuft. In dieser Position übergreift das abgewinkelte Ende 132 der Brücke 130 die vom Verbindungselement 126 abgewandte Seitenwand 78 der Schiebefeder 16, die somit in Längsrichtung des Gelenkstifts 128 auf diesem gesichert ist.

## Patentansprüche

1. Anschlussvorrichtung (10) zum gelenkigen Verbinden eines Wischblatts (28, 30) mit einem Wischarm, mit dessen freiem Ende ein Verbindungselement (12, 120, 126) fest verbunden ist, das über Lagermittel (88, 122, 124) gelenkig mit einem Adapter (22, 24) verbunden ist, der fest auf einem Tragelement (28) des Wischblatts (28, 30) sitzt, **dadurch gekennzeichnet, dass** eine Grundverkleidung (18), die den Adapter (22, 24) umgibt und an diesem oder dem Tragelement (28) befestigt werden kann, eine in Längsrichtung (136) verlaufende Führungsschiene (66) aufweist, auf der in Längsrichtung (136) verschiebbar eine Schiebefeder (16) gelagert ist, die durch Rastmittel (68, 70, 72) in Längsrichtung (136) der Führungsschiene (66) in verschiedenen Positionen in unterschiedlichen Abständen (114, 116, 118) zu einem Führungsblock (112) der Grundverkleidung (18) feststellbar ist, der sich an das wischarmseitige Ende der Führungsschiene (66) anschließt.

2. Anschlussvorrichtung (10) nach Anspruch 1, **dadurch gekennzeichnet, dass** die Grundverkleidung (18) mittels eines Befestigungsprofils (64) auf dem Adapter (22, 24) sitzt.

3. Anschlussvorrichtung (10) nach Anspruch 1 oder 2, **dadurch gekennzeichnet, dass** die Führungsschiene (66) an ihren Längsseiten Längsnuten (74) besitzt, in denen Längsrippen (76) der Schiebefeder (16) geführt sind.

4. Anschlussvorrichtung (10) nach einem der vorhergehenden Ansprüche, **dadurch gekennzeichnet, dass** die Führungsschiene (66) an verschiedenen Positionen ihrer Erstreckung in Längsrichtung (136) als Rastmittel zwei einander gegenüberliegende Rastvertiefungen (68, 70, 72) aufweist, die zu zwei entsprechenden Einraststutzen an der Schiebefeder (16) passen.

5. Anschlussvorrichtung (10) nach Anspruch 4, **dadurch gekennzeichnet, dass** die Einraststutzen durch Druck von außen auf die Seitenwände (78) der Schiebefeder (16) entriegelt werden können.

6. Anschlussvorrichtung (10) nach einem der vorhergehenden Ansprüche, **dadurch gekennzeichnet, dass** der Adapter aus einem Funktionsadapter (22) und zwei Basisadapterteilen (46) eines Basisadapters (24) besteht, die seitlich auf das Tragelement (28) aufsetzbar sind und durch den Funktionsadapter (22) zusammengehalten werden.

7. Anschlussvorrichtung (10) nach einem der vorhergehenden Ansprüche, **dadurch gekennzeichnet, dass** eine Haltefeder (14) der Anschlussvorrichtung (10) an einer Stirnseite eine Lagerwalze (88) besitzt, die mit einem entsprechenden Lagerelement an der Schiebefeder (16) ein Scharnier bildet.

8. Anschlussvorrichtung (10) nach Anspruch 7, **dadurch gekennzeichnet, dass** die Haltefeder (14) an ihrer Deckwand (92) eine Federzunge (96) besitzt, an deren freiem Ende eine Taste (98) vorgesehen ist, die in ein Rastloch (106) eines Aufnahmeprofils (102) des Verbindungselements (12) einrasten kann.

9. Anschlussvorrichtung (10) nach Anspruch 7 oder 8, **dadurch gekennzeichnet, dass** die Innenseiten der Seitenwände (90) der Haltefeder (14) an den Außenseiten eines Führungsblock (112) der Grundverkleidung (18) geführt sind, wobei die Haltefeder (14) in montierter Stellung durch Querzapfen (61) in Längsrichtung (136) gehalten wird, die an der Grundverkleidung (18) vorgesehen sind und in entsprechende Führungen der Haltefeder (14) eingreifen.

10. Anschlussvorrichtung (10) nach Anspruch 9, **dadurch gekennzeichnet, dass** die Querzapfen (21) durch einen Querstift gebildet werden, der in einem Mittelsteg (60) des Adapters (22, 24) angebracht ist und nach außen ein Stück weit durch Öffnungen (63) aus den Seitenwänden (62) des Führungsblocks (112) vorsteht.

11. Anschlussvorrichtung (10) nach einem der Ansprüche 1 bis 6, **dadurch gekennzeichnet, dass** in einer mittleren Position der Schiebefeder (16) zwischen dieser und dem Führungsblock (112) ein Zwischenraum gebildet wird, in den ein Gelenkkopf (122) eines Verbindungselements (120) passt, wobei eine Verlängerung (86) einer Deckwand (80) der Schiebefeder (16) den Zwischenraum überdeckt und in eine Halterung (113) des Führungsblocks (112) eingreift.

12. Anschlussvorrichtung (10) nach einem der Ansprüche 1 bis 6, **dadurch gekennzeichnet, dass** die Schiebefeder (16) in einer Position, die dem antriebsseitigen Ende des Wischblatts (28, 30) abgewandt ist, mit ihren Seitenwänden (78) den Führungsblock (112) seitlich ein Stück weit überdeckt und der Verlängerung (86) der Deckwand (80) in die Halterung (113) des Führungsblocks (112) eingreift, wobei mindestens in einer Lagerwand (78) eine Lageröffnung (82) vorgesehen ist.

13. Anschlussvorrichtung (10) nach Anspruch 12, **dadurch gekennzeichnet, dass** in zwei einander gegenüberliegende Lageröffnungen (82) eine Lagerhülse (20) eingesetzt ist.

14. Wischblatt (28, 30) mit einer Anschlussvorrichtung (10) **gekennzeichnet durch** einen der vorhergehenden Ansprüche.

## Claims

1. Connection device (10) for the articulated connection of a wiper blade (28, 30) to a wiper arm, to the free end of which a joining element (12, 120, 126) is fixedly connected, said joining element being connected in an articulated manner via bearing means (88, 122, 124) to an adapter (22, 24) which is seated fixedly on a support element (28) of the wiper blade (28, 30), **characterized in that** a base cover (18) which surrounds the adapter (22, 24) and can be fastened thereto or to the support element (28) has a guide rail (66) which runs in the longitudinal direction (136) and on which a push-spring (16) is mounted displaceably in the longitudinal direction (136), said push-spring being fixable by latching means (68, 70, 72) in various positions in the longitudinal direction (136) of the guide rail (66) at different distances (114, 116, 118) from a guide block (112) of the base cover (18), which guide block adjoins that end of the guide rail (66) which is on the wiper arm side.

2. Connection device (10) according to Claim 1, **characterized in that** the base cover (18) is seated on the adapter (22, 24) by means of a fastening profile (64).

3. Connection device (10) according to Claim 1 or 2, **characterized in that** the guide rail (66) has, on its longitudinal sides, longitudinal grooves (74) in which longitudinal ribs (76) of the push-spring (16) are guided.

4. Connection device (10) according to one of the preceding claims, **characterized in that** the guide rail (66) has, at various positions of its extent in the longitudinal direction (136), as latching means two mutually opposite latching depressions (68, 70, 72) which match two corresponding latching connectors on the push-spring (16).

5. Connection device (10) according to Claim 4, **characterized in that** the latching connectors can be released by pressure from the outside on the side walls (78) of the push-spring (16).

6. Connection device (10) according to one of the preceding claims, **characterized in that** the adapter comprises a functional adapter (22) and two base adapter parts (46) of a base adapter (24), which base adapters can be placed laterally onto the support element (28) and are held together by the functional adapter (22).

7. Connection device (10) according to one of the preceding claims, **characterized in that** a retaining spring (14) of the connection device (10) has, on an end side, a bearing roller (88) which, together with a corresponding bearing element on the push-spring (16), forms a hinge.

8. Connection device (10) according to Claim 7, **characterized in that** the cover wall (92) of the retaining spring (14) has a spring tongue (96), at the free end of which a push button (98) is provided, which push button can latch into a latching hole (106) of a receiving profile (102) of the joining element (12).

9. Connection device (10) according to Claim 7 or 8, **characterized in that** the inner sides of the side walls (90) of the retaining spring (14) are guided on the outer sides of a guide block (112) of the base cover (18), the retaining spring (14) being retained in the longitudinal direction (136) in the fitted position by means of transverse pegs (61) which are provided on the base cover (18) and engage in corresponding guides of the retaining spring (14).

10. Connection device (10) according to Claim 9, **characterized in that** the transverse pegs (21) are formed by a transverse pin which is fitted in a central web (60) of the adapter (22, 24) and protrudes outward for a distance out of the side walls (62) of the guide block (112) through openings (63).

11. Connection device (10) according to one of Claims 1 to 6, **characterized in that**, in a central position of the push-spring (16), an intermediate space, into which an articulation head (122) of a joining element (120) fits, is formed between said push-spring and the guide block (112), with an extension (86) of a cover wall (80) of the push-spring (16) covering the intermediate space and engaging in a holder (113) of the guide block (112).

12. Connection device (10) according to one of Claims 1 to 6, **characterized in that**, in a position which faces away from the drive-side end of the wiper blade (28, 30), the push-spring (16), by means of its side walls (78), laterally covers the guide block (112) for a distance, and the extension (86) of the cover wall (80) engages in the holder (113) of the guide block (112), a bearing opening (82) being provided in at least one bearing wall (78).

13. Connection device (10) according to Claim 12, **characterized in that** a bearing sleeve (20) is inserted into two mutually opposite bearing openings (82).

14. Wiper blade (28, 30) with a connection device (10) **characterized by** one of the preceding claims.

## Revendications

1. Dispositif de raccordement (10) pour la connexion articulée d'un balai d'essuie-glace (28, 30) à un bras d'essuie-glace, à l'extrémité libre duquel est connecté fixement un élément de connexion (12, 120, 126) qui est connecté par le biais de moyens de palier (88, 122, 124) de manière articulée à un adaptateur (22, 24), qui repose fixement sur un élément de support (28) du balai d'essuie-glace (28, 30), **caractérisé en ce qu'**un habillage de base (18), qui entoure l'adaptateur (22, 24) et qui peut être fixé sur celui-ci ou sur l'élément de support (28), présente un rail de guidage (66) s'étendant dans la direction longitudinale (136), sur lequel est monté, de manière déplaçable dans la direction longitudinale (136), un ressort de poussée (16), qui peut être fixé par des moyens d'encliquetage (68, 70, 72) dans la direction longitudinale (136) du rail de guidage (66) dans différentes positions à des distances différentes (114, 116, 118) par rapport à un bloc de guidage (112) de l'habillage de base (18), lequel bloc de guidage se raccorde à l'extrémité du rail de guidage (66) du côté du bras d'essuie-glace.

2. Dispositif de raccordement (10) selon la revendication 1, **caractérisé en ce que** l'habillage de base (18) repose au moyen d'un profilé de fixation (64) sur l'adaptateur (22, 24).

3. Dispositif de raccordement (10) selon la revendication 1 ou 2, **caractérisé en ce que** le rail de guidage (66) possède sur ses côtés longitudinaux des rainures longitudinales (74), dans lesquelles sont guidées des nervures longitudinales (76) du ressort de poussée (16).

4. Dispositif de raccordement (10) selon l'une quelconque des revendications précédentes, **caractérisé en ce que** le rail de guidage (66) présente, dans différentes positions de son étendue dans la direction longitudinale (136), en tant que moyens d'encliquetage, deux renfoncements d'encliquetage opposés l'un à l'autre (68, 70, 72), qui s'adaptent à deux raccords d'encliquetage correspondants sur le ressort de poussée (16).

5. Dispositif de raccordement (10) selon la revendication 4, **caractérisé en ce que** les raccords d'encliquetage peuvent être déverrouillés par pression depuis l'extérieur sur les parois latérales (78) du ressort de poussée (16).

6. Dispositif de raccordement (10) selon l'une quelconque des revendications précédentes, **caractérisé en ce que** l'adaptateur se compose d'un adaptateur fonctionnel (22) et de deux parties d'adaptateur de base (46) d'un adaptateur de base (24), qui peuvent être posées latéralement sur l'élément de support (28) et qui sont maintenues ensemble par l'adaptateur fonctionnel (22).

7. Dispositif de raccordement (10) selon l'une quelconque des revendications précédentes, **caractérisé en ce qu'**un ressort de retenue (14) du dispositif de raccordement (10) possède sur un côté frontal un rouleau de support (88), qui forme avec un élément de palier correspondant une charnière sur le ressort de poussée (16).

8. Dispositif de raccordement (10) selon la revendication 7, **caractérisé en ce que** le ressort de retenue (14) possède sur sa paroi de recouvrement (92) une langue élastique (96) à l'extrémité libre de laquelle est prévue une touche (98) qui peut s'encliqueter dans un trou d'encliquetage (106) d'un profilé de réception (102) de l'élément de connexion (12).

9. Dispositif de raccordement (10) selon la revendication 7 ou 8, **caractérisé en ce que** les côtés intérieurs des parois latérales (90) du ressort de retenue (14) sont guidés sur les côtés extérieurs d'un bloc de guidage (112) de l'habillage de base (18), le ressort de retenue (14) étant maintenu dans la direction longitudinale (136) dans la position montée par des tourillons transversaux (61), qui sont prévus sur l'habillage de base (18) et qui viennent en prise dans des guides correspondants du ressort de retenue (14).

10. Dispositif de raccordement (10) selon la revendication 9, **caractérisé en ce que** les tourillons transversaux (21) sont formés par une goupille transversale qui est montée dans une arête centrale (60) de l'adaptateur (22, 24) et qui dépasse quelque peu vers l'extérieur à travers des ouvertures (63) hors des parois latérales (62) du bloc de guidage (112).

11. Dispositif de raccordement (10) selon l'une quelconque des revendications 1 à 6, **caractérisé en ce que** dans une position centrale du ressort de poussée (16) entre celui-ci et le bloc de guidage (112), est formé un espace intermédiaire dans lequel s'ajuste une tête articulée (122) d'un élément de connexion (120), un prolongement (86) d'une paroi de recouvrement (80) du ressort de poussée (16) recouvrant l'espace intermédiaire et venant en prise dans une fixation (113) du bloc de guidage (112).

12. Dispositif de raccordement (10) selon l'une quelconque des revendications 1 à 6, **caractérisé en ce que** le ressort de poussée (16) recouvre quelque peu latéralement avec ses parois latérales (78) le bloc de guidage (112) dans une position qui est opposée à l'extrémité du balai d'essuie-glace (28, 30) du côté de l'entraînement, et le prolongement (86) de la paroi de recouvrement (80) vient en prise dans la fixation (113) du bloc de guidage (112), une ouverture de palier (82) étant prévue au moins dans une paroi de palier (78).

13. Dispositif de raccordement (10) selon la revendication 12, **caractérisé en ce qu'**une douille de palier (20) est insérée dans deux ouvertures de palier opposées l'une à l'autre (82).

14. Balai d'essuie-glace (28, 30) comprenant un dispositif de raccordement (10), **caractérisé par** l'une quelconque des revendications précédentes.
